# EUROPEAN PATENT SPECIFICATION

(11) **EP 2 324 613 B1**
(45) Date of publication and mention of the grant of the patent: **18.05.2016**
(21) Application number: 08803617.3
(22) Date of filing: 03.09.2008
(51) Int. Cl.: H04L 29/12, H04L 29/06

(54) **TEL URI HANDLING METHOD AND APPARATUS**
VERFAHREN UND VORRICHTUNG ZUM TEL-URI-UMGANG
PROCÉDÉ ET APPAREIL DE GESTION D'IDENTIFIANT UNIVERSEL DE RESSOURCE (URI) TÉLÉPHONIQUE

(43) Date of publication of application: 25.05.2011
(73) Proprietor: Telefonaktiebolaget LM Ericsson (publ), 164 83 Stockholm (SE)
(72) Inventor: WÅHL, Johan, S-122 41 Enskede (SE); ÖSTER, Gert, S-175 48 Järfälla (SE)
(74) Representative: Burchardi, Thomas
(86) International application number: PCT/EP2008/061646
(87) International publication number: WO 2010/031425

(56) References cited:
- EP-A1- 1 708 468
- "SKYPEIN" INTERNET CITATION 28 March 2003 (2003-03-28), XP002387697 Retrieved from the Internet: URL:http://web.archive.org/web/20050328011 622/http://www.skype.com/produc ts/skypein/> [retrieved on 2006-06-23]

## Description

### Technical Field

The present invention relates to the handling of TEL Uniform Resource Identifiers used to route messages in an IP Multimedia Subsystem network. In particular the invention relates to the provision of phone context information associated with TEL Uniform Resource Identifiers.

### Background

IP Multimedia services provide a dynamic combination of voice, video, messaging, data, etc. within the same session. By growing the number of basic applications and the media which it is possible to combine, the number of services offered to the end users will continue to grow, leading to a new generation of personalised, rich multimedia communication services. The IP Multimedia Subsystem (IMS) is the technology defined by the Third Generation Partnership Project (3GPP) to provide IP Multimedia services over mobile communication networks. The IMS provides key features to enrich the end-user person-to-person communication experience through the use of standardised IMS Service Enablers, which facilitate these new rich person-to-person (client-to-client) communication services as well as person-to-content (client-to-server) services over IP-based networks.

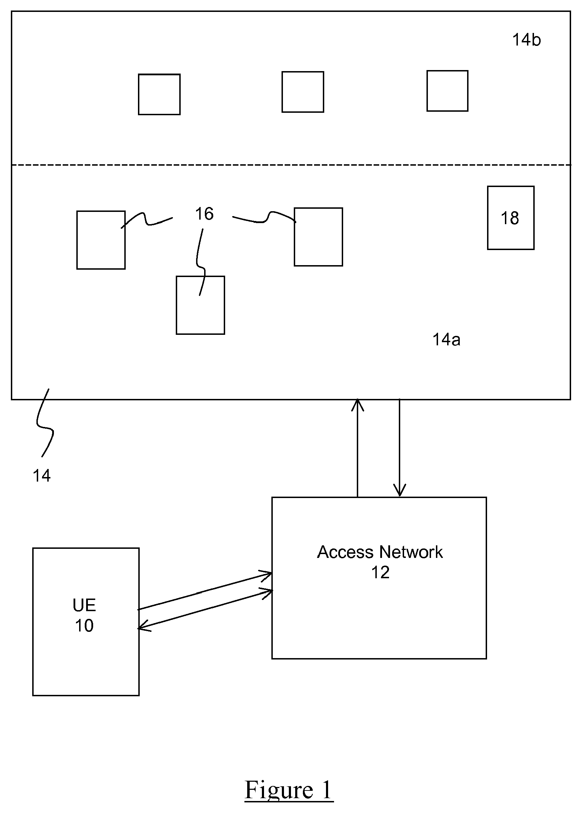

Figure 1 illustrates schematically how a user terminal 10 interacts with the IMS 14. The mobile terminal 10 accesses the IMS through an access network 14, which might be, for example, a GPRS/PS mobile access network. The IMS 14 includes a core network 14a and a service network 14b. Call/Session Control Functions (CSCFs) 16 operate as SIP proxies within the IMS core network 14a. The 3GPP architecture defines three types of CSCFs: the Proxy CSCF (P-CSCF) which is the first point of contact within the IMS for a SIP terminal; the Serving CSCF (S-CSCF) interacts with the IMS service network 14b to provide services to the user that the user is subscribed to; and the Interrogating CSCF (I-CSCF) whose role is to identify the correct S-CSCF and to forward to that S-CSCF a request received from a SIP terminal via a P-CSCF. The IMS core 14a also includes the Home Subscriber Server (HSS) 18 which stores the user profiles of subscribers to the IMS services.

The IMS makes use of the Session Initiation Protocol (SIP) to set up and control calls or sessions between user terminals. SIP signals use the Session Description Protocol (SDP) to describe and negotiate the media components of the session. Whilst SIP was created as a user-to-user protocol, the IMS allows operators and service providers to control user access to services and to charge users accordingly. For Example, when a User wishes to access an IMS network, this is done by issuing a SIP REGISTER request.

In the IMS, users are allocated one or more "public user identities". Users' home operators are responsible for this allocation. A public user identity is typically either a SIP URI or a TEL URI. A SIP URI typically has the format *"sip:firstname.lastname@operator.com",* A TEL URI on the other hand, as specified in RFC3966, represents a phone number having an international E.164 format. A TEL URI represents a globally unique phone number such as *"tel:*+*44-123-456-7890".*

The use of global TEL URIs allows the IMS to break out calls from an IMS client to a circuit switched network, as well as allowing subscribers of a circuit switched network to reach IMS subscribers. It also allows IMS subscribers to continue to use traditional telephone numbers, rather than SIP URIs, to reach other IMS subscribers. Whilst messages can be routed through the IMS directly using SIP URIs (using DNS look-up operations to identify next hop IP addresses), the use of TEL URIs requires the IMS to first perform a look-up operation to map TEL URIs to SIP URIs. Within the IMS, mapping of TEL URIs to SIP URIs is typically performed at the allocated S-CSCF.

Globally unique TEL URIs can be resolved to SIP URIs using Telephone Number Mapping (ENUM) practices as described in IETF RFC 3761 and 3764. ENUM provides for the mapping of globally unique TEL URIs to Internet routable URIs, including SIP URIs, using the Internet Domain Name System (DNS).

IETF RFC 3966 provides a mechanism that allows an IMS client to include within a call setup request a TEL URI (of a called terminal) in a local format, e.g. *"tel; 456-7890".* However, the client must include within the request a "phone context" parameter to identify to the IMS core the dialling plan or context in which the local number was provided. This information is necessary to allow the local number to be "internationalised". A context or dialling plan can be identified by a global number digit set, for example the initial digits of an E.164 number or Mobile Station International ISDN (e.g. +441234), or by a domain name, e.g. operator.com. This means of course that the client must know the dialling plan to use for its particular geographical location. The client terminal must either be preconfigured with a dialling plan by the operator (which may prevent the sharing of terminals between users) or the identity of the dialling plan must be entered by the user (which is inconvenient for the user and also error prone). It is noted that a user terminal may also include a phone context with a SIP URI, when a phone number is included within a SIP URI, i.e. where "user=dialstring" or "user=phone".

Patent publication WO2008/031459 describes a mechanism for resolving a local TEL URI to a service URI for routing a message over an IP-based communication system. However, this still requires the client terminal to provide the relevant phone context (or Context Identifier) along with the TEL URI.

EP 1708468 describes a system for configuring user terminals with network based parameters such as dialling patterns.

### Summary

The invention is related to methods, a user terminal and an apparatus for installing a default dialling plan identity into a user terminal comprising an IMS client according to claims 1, 4, 6 and 12. Further embodiments are disclosed in the dependent claims.

### Brief Description of the Drawings

Figure 1 illustrates schematically a client user terminal accessing the IP Multimedia Subsystem;
Figure 2 illustrates an overview of the signalling in an embodiment of the invention;
Figure 3 illustrates in more detail the signal flows of the embodiment of Figure 2;
Figure 4 illustrates schematically a CSCF node within the IMS;
Figure 5 is a flow diagram illustrating the method steps of an embodiment of the invention; and
Figure 6 is a schematic illustration of the functional components of a user terminal configured in accordance with embodiments of the invention.

### Detailed Description

A user accesses IP Multimedia Subsystem (IMS) services such as voice calls, multimedia calls, etc, using a client terminal (or user equipment, UE) comprising an IMS client that is attached to some suitable access network. For the purpose of illustration, the example of a SIP telephone attached to a broadband fixed line network via a cable modem or the like will now be considered. It is important to note that the user treats the telephone as a normal "black" phone, and is not necessarily aware that it employs an IMS client. The IMS client is responsible for constructing SIP messages, using any dialled number to create the TEL URI including the phone context.

The user would like to be able to make local and national calls using the SIP telephone without having to know the international (and national in the case of local calls) dialling prefixes and country codes. So for example, if the user is located in Oxford, England, the user would like to be able to call friends and colleagues also located in Oxford using numbers of the format *"123 456",* without having to add the prefix *"*+*44 1865".* The user would also like to be able "borrow" a friend's or colleague's terminal in such a way that he can make use of his own home dialling plan, regardless of the user's current location. Even if a user remains in a given location and only uses his own SIP terminal, this functionality is extremely useful to network operators and device manufacturers/providers as telephones can be provided without requiring geography dependent configuration.

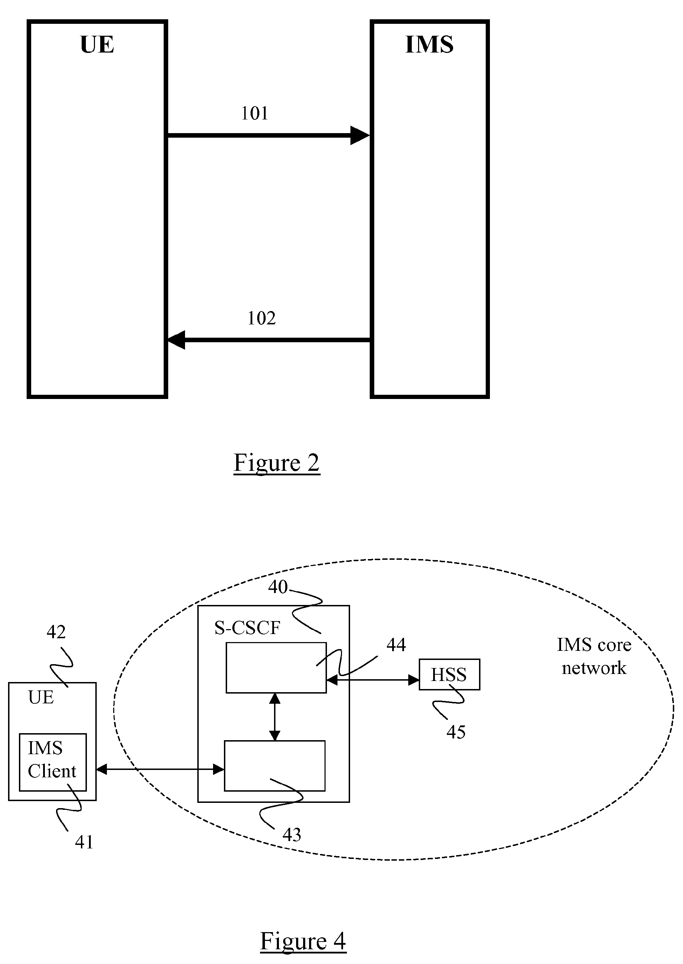

Figure 2 illustrates the basic concept of one embodiment of the invention, in which the phone context is provided by the IMS core in response to an authorised REGISTER request. At step 101, a UE attaches to the IMS network in the normal manner using a SIP REGISTER request. At step 102, the IMS network responds with a SIP 200OK indicating that the UE's request is successful. The 200OK includes the identity of the dialling plan appropriate for the registered user of the UE.

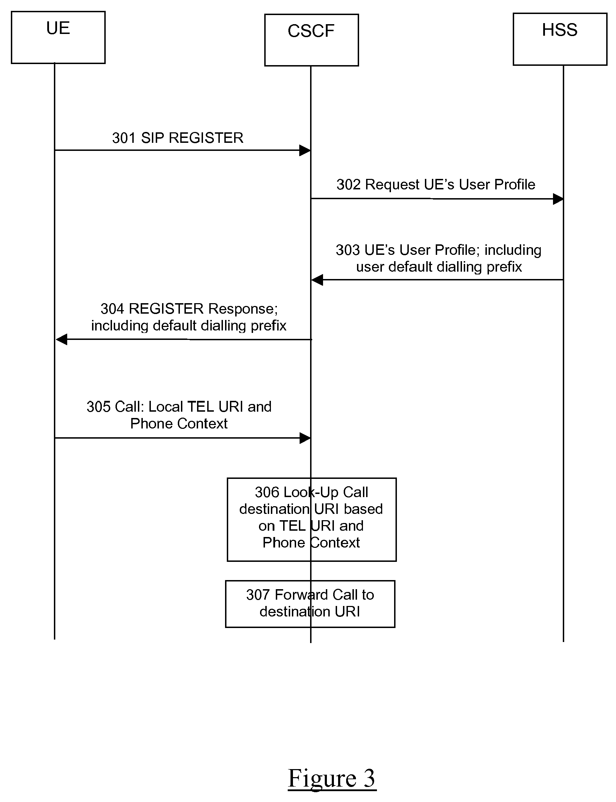

Figure 3 illustrates the phone context provision mechanism in more detail. At step 301 the UE sends an initial SIP REGISTER request to the IMS core, and this is routed to a S-CSCF in the IMS core, via an I-CSCF. On receiving the REGISTER Request, at step 302, the S-CSCF sends a request to the HSS to be provided with the subscriber's user profile, and this is downloaded to the CSCF from the HSS at step 303. The identity of the subscriber's default dialling plan is included in the profile. At step 304, the S-CSCF returns the SIP 200OK response to the UE. This confirms to the UE that registration has been completed successfully. In the depicted embodiment, the 200OK includes the identity of the registered user's dialling plan. If no dialling plan is identified in the user profile, then at step 304 the CSCF may provide the identity of a network default dialling plan, if such exists. This may be useful in the context of mobile subscribers, where all mobile subscribers (of the network) can share a common dialling plan.

Note that Figure 3 shows the identity of the dialling plan being provided in response to an initial SIP REGISTER request. However, it will be appreciated that the identity of the dialling plan may be provided in response to other SIP messages from the UE. For example, in the case of a mobile UE which is roaming from one location into another location and is required to re-register, then an updated dialling plan identity may be provided in response to the SIP RE-REGISTER request.

In accordance with this embodiment and as shown in Figure 3, following user IMS registration, at step 305 the UE initiates a call (e.g. by sending a SIP INVITE towards another user terminal to initiate a session) using a Local TEL URI. The IMS client within the UE is configured to recognise a local dialled number by the absence of a leading global number indicator "+". In this case, the IMS client includes as the phone context URI parameter, the identity of the dialling plan that it has been provided with by the IMS core, satisfying the requirements of RFC 3966. At step 306, the S-CSCF uses the dialling plan identified in the phone context URI parameter to convert the dialled number to its full international representation, which is used to perform the look-up in order to establish the correct format of the URI (such as the SIP URI) of the destination and, at step 307 forwards the INVITE towards that destination. Of course, if the user dials a number that starts with the global number indicator "+", for example if he or she is calling a foreign number, the IMS client detects this and does not need to add the phone context parameter to indicate the dialling plan in the outgoing SIP INVITE. It is noted that the dialling plan may be identified directly, i.e. by an international dialling prefix, or indirectly by a name, e.g. "stockholm.se". In the latter case, the network uses a normalising table to convert the name into an international dialling prefix.

Note that additional signalling, such as password challenges etc, might be included in the signal flow as part of the Registration process. For simplicity, this additional signalling is not shown in Figure 3.

Figure 4 illustrates schematically functional entities within an S-CSCF node 40 for configuring an IMS client 41 of a user terminal 42 with a default "home" dialling plan identity. A sending/receiving unit 43 of the S-CSCF communicates with the IMS client 41 to receive a SIP REGISTER or RE_REGISTER. A first processor 44 communicates with the HSS 45 to retrieve the user's profile, including a home dialling plan identity. This is passed to the sending/receiving unit 43, which sends it to the IMS client within the UE.

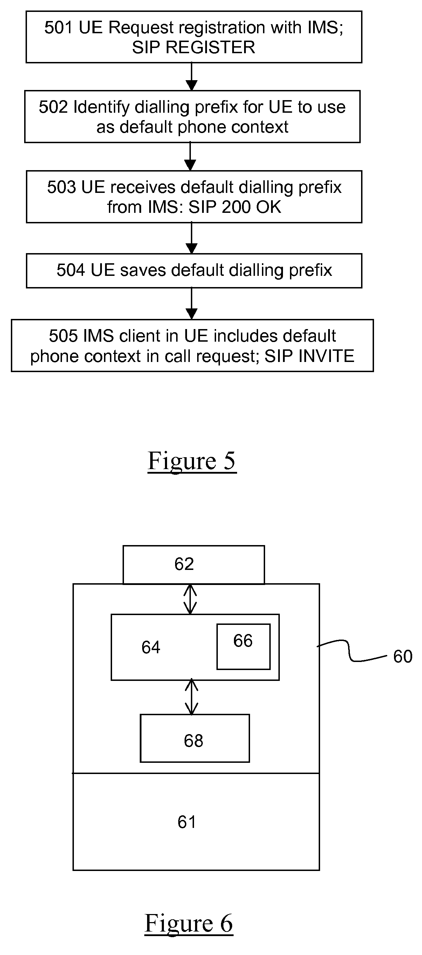

Figure 5 is a flow diagram illustrating the principal steps involved in performing the method of the present invention. At step 501 a user terminal configured as an IMS client requests registers with an IMS network. At step 502, following the registration request, the IMS network identifies the dialling plan that the user terminal should use as the default dialling plan, based on the identity of the user. As described above this may involve the IMS network obtaining the dialling plan identity as part of the user profile from the user's HSS. At step 503 the user terminal receives the identity of the default dialling plan from the IMS network. At step 504 the default dialling plan identity is saved at the user terminal. Subsequently, at step 505 the user makes a call using a local TEL URI. The IMS client then includes as a phone context parameter the default dialling plan identity when sending the call request to the IMS network at step 506.

Figure 6 is a schematic illustration showing the functional components of a user terminal 60, configured in accordance with an embodiment of the invention. User terminal 60 includes a user interface 61 (e.g. keypad and display) and a transceiver 62 for sending and receiving signals to/from an IMS network. Transceiver 62 may be a wireless or wired connection to, for example, an internet broadband cable system. The user terminal 60 includes a processor 64 that includes an IMS client 66, and a memory 68. The user terminal 60 is configured, at or following registration of the user of the user terminal with an IMS network, to receive a default dialling plan identity from the network, and to save the default dialling plan identity at the terminal for subsequent use by the IMS client.

It will be appreciated by the person of skill in the art that various modifications may be made to the above described embodiments without departing from the scope of the present invention. For example, the invention is not limited to resolving TEL URIs to SIP URIs, and it can be used for resolving TEL URIs to other types of Internet routable URIs, e.g. H.323 addresses. Application of the present invention would allow the mapping of local TEL URIs to any appropriate URI type using the phone-context associated with the TEL URI. The invention may also be employed to enable the user terminal to provide a default phone context together with a SIP URI in cases where the SIP URI comprises a local dialed number.

In order to accommodate a Centrex or private numbering plan, the network may be able to map a given phone context to different dialling prefixes. For example, this may be dependent upon user profile, user location, etc.

## Claims

1. A method of installing a default dialling plan identity into a user terminal (42) comprising an IMS client (41), the method comprising, at or following registration of a user of the user terminal to an IMS network, receiving (304) at the terminal from the IMS network a dialling plan identity and saving the identity as a default identity at the terminal, wherein the default dialling plan identity is subsequently used by the IMS client as a phone context as required by IETF RFC 3966, the phone context being a parameter that identifies to the IMS network the dialling plan in which a local number was provided and wherein the dialling plan includes a numbering plan and the use of prefixes, suffixes and additional information required to complete a call.

2. A method according to claim 1, wherein the dialling plan identity is received when the user terminal performs IMS registration or re-registration (301) with the IMS network.

3. A method according to claim 1 or claim 2, wherein the IMS client includes the said phone context with a TEL or SIP URI when sending a message to the IMS network.

4. A user terminal (42) comprising an IMS client (41), the user terminal being configured, at or following registration of the user of the user terminal with an IMS network, to receive a default dialling plan identity from the network, the dialling pan including a numbering plan and the use of prefixes, suffixes and additional information required to complete a call, and to save the default dialling plan identity at the terminal for subsequent use by the IMS client as a phone context as required by IETF RFC 3966, the phone context being a parameter that identifies to the IMS network the dialling plan in which a local number was provided.

5. A user terminal according to claim 4, wherein the IMS client is configured to include the phone context when the user terminal sends a service request message to the IMS network including a TEL or SIP URI.

6. Apparatus (40) for configuring an IMS client (41) of a user terminal (42) with a default dialling plan identity, wherein the dialling plan includes a numbering plan and the use of prefixes, suffixes and additional information required to complete a call, the apparatus being configured for use within an IMS core network and comprising:
a processor for determining a home dialling plan identity for a user of said user terminal;
a sending unit for sending said home dialling plan identity to said user terminal; and
a CSCF configured to receive a call set-up request that includes said home dialling plan identity as a phone context as required by IETF RFC 3966, the phone context being a parameter that identifies to the IMS network the dialling plan in which a local number was provided and to use the identity to establish a destination URI for the call.

7. The apparatus of claim 6 and being configured to obtain the dialling plan identity in response to receipt of a registration or re-registration request from the user terminal.

8. The apparatus of claim 7 and being configured to obtain the dialling plan identity as part of a user profile obtained from a Home Subscriber Server.

9. The apparatus of any of claims 6 to 8 wherein the dialling plan identity is included with a TEL URI in the call set-up request.

10. The apparatus of any of claims 6 to 9 and being configured to operate as a Call Session Control Function.

11. The apparatus of any of claims 6 to 10 and being configured to provide a network default dialling or numbering plan identity when no other dialling plan identity can be obtained from the network.

12. A method of handling SIP messages in an IP-based communication network and comprising:
at or following registration (301) of a user with an IMS network, sending (304) to the user's terminal from the network, a default dialling plan identity, wherein the dialling plan includes a numbering plan and the use of prefixes, suffixes and additional information required to complete a call,;
receiving the dialling plan identity at said user terminal and saving the identity for use by an IMS client;
sending (305) a SIP session initiation request from the user terminal to the IMS network including a Local Tel URI and said default dialling or numbering plan identity as a phone context as required by IETF RFC 3966, the phone context being a parameter that identifies to the IMS network the dialling plan in which a local number was provided.

13. The method of claim 12, wherein the dialling plan identity is sent to the user terminal when the user registers or re-registers with the IMS network.

14. A method according to claim 12 or 13, wherein said dialling plan identity is sent to the user terminal by a Serving Call Session Control Function.

15. The method of claim 14, wherein the dialling plan identity is maintained within the IMS network as part of a user profile held by a Home Subscriber Server and downloaded to the Serving Call Session Control Function.

16. The method of claim 13 or 14, wherein the dialling plan identity is a network default dialling or numbering plan identity when no other dialling plan identity can be obtained from the network.

## Patentansprüche

1. Verfahren zum Installieren einer Standardwählplankennung in einem Benutzerendgerät (42), das einen IMS-Client (41) umfasst, wobei das Verfahren bei oder nach Anmeldung eines Benutzers des Benutzerendgeräts bei einem IMS-Netz ein Empfangen (304) am Endgerät vom IMS-Netz einer Wählplankennung und Speichern der Kennung als eine Standardkennung am Endgerät umfasst, wobei die Standardwählplankennung vom IMS-Client anschließend als ein Telefonkontext gemäß IETF RFC 3966 verwendet, wobei der Telefonkontext ein Parameter ist, der den Wählplan, in welchem eine lokale Nummer bereitgestellt wurde, für das IMS-Netz identifiziert, und
wobei der Wählplan einen Rufnummernplan und die Verwendung von Vorwahlnummern, Nachwahlnummern und zusätzlichen Informationen umfasst, die zum Herstellen einer Verbindung erforderlich sind.

2. Verfahren nach Anspruch 1, wobei die Wählplankennung empfangen wird, wenn das Benutzerendgerät IMS-Anmeldung oder -Neuanmeldung (301) beim IMS-Netz durchführt.

3. Verfahren nach Anspruch 1 oder 2, wobei der IMS-Client beim Senden einer Nachricht an das IMS-Netz den Telefonkontext mit einem TEL- oder SIP-URI einbezieht.

4. Benutzerendgerät (42), das einen IMS-Client (41) umfasst, wobei das Benutzerendgerät so konfiguriert ist, dass es bei oder nach Anmeldung des Benutzers des Benutzerendgeräts bei einem IMS-Netz eine Standardwählplankennung vom Netz empfängt, wobei der Wählplan einen Rufnummernplan und die Verwendung von Vorwahlnummern, Nachwahlnummern und zusätzlichen Informationen umfasst, die zum Herstellen einer Verbindung erforderlich sind, und die Standardwählplankennung am Endgerät zur anschließenden Verwendung durch den IMS-Client als Telefonkontext gemäß IETF RFC 3966 speichert, wobei der Telefonkontext ein Parameter ist, der den Wählplan, in welchem eine lokale Nummer bereitgestellt wurde, für das IMS-Netz identifiziert.

5. Benutzerendgerät nach Anspruch 4, wobei der IMS-Client so konfiguriert ist, dass er den Telefonkontext einbezieht, wenn das Benutzerendgerät eine Dienstanforderungsnachricht an das IMS-Netz sendet, die einen TEL- oder SIP-URI umfasst.

6. Vorrichtung (40) zum Konfigurieren eines IMS-Client (41) eines Benutzerendgeräts (42) mit einer Standardwählplankennung, wobei der Wählplan einen Rufnummernplan und die Verwendung von Vorwahlnummern, Nachwahlnummern und zusätzlichen Informationen umfasst, die zum Herstellen einer Verbindung erforderlich sind, wobei die Vorrichtung zur Verwendung innerhalb eines IMS-Kernnetzes konfiguriert ist und umfasst:
einen Prozessor zum Bestimmen einer Heimat-Wählplankennung für einen Benutzer des Benutzerendgeräts;
eine Sendeeinheit zum Senden der Heimat-Wählplankennung an das Benutzerendgerät; und
eine CSCF, die so konfiguriert ist, dass sie eine Verbindungsaufbauanforderung empfängt, welche die Heimat-Wählplankennung als einen Telefonkontext gemäß IETF RFC 3966 umfasst, wobei der Telefonkontext ein Parameter ist, der den Wählplan, in welchem eine lokale Nummer bereitgestellt wurde, für das IMS-Netz identifiziert, und die Kennung zum Festlegen eines Ziel-URIs für die Verbindung verwendet.

7. Vorrichtung nach Anspruch 6 und so konfiguriert, dass sie die Wählplankennung in Reaktion auf den Empfang einer Anmeldungs- oder Neuanmeldungsanforderung vom Benutzerendgerät erhält.

8. Vorrichtung nach Anspruch 7 und so konfiguriert, dass sie die Wählplankennung als Teil eines Benutzerprofils erhält, das von einem Heimat-Teilnehmerserver erhalten wird.

9. Vorrichtung nach einem der Ansprüche 6 bis 8, wobei die Wählplankennung mit einem TEL-URI in der Verbindungsaufbauanforderung enthalten ist.

10. Vorrichtung nach einem der Ansprüche 6 bis 9 und so konfiguriert, dass sie als eine Rufsitzungssteuerfunktion fungiert.

11. Vorrichtung nach einem der Ansprüche 6 bis 10 und so konfiguriert, dass sie eine Netz-Standardwähl- oder - Rufnummernplankennung bereitstellt, wenn keine andere Wählplankennung vom Netz erhalten werden kann.

12. Verfahren zur Handhabung von SIP-Nachrichten in einem IP-basierten Kommunikationsnetz und umfassend:
Senden (304) bei oder nach Anmeldung (301) eines Benutzers bei einem IMS-Netz einer Standardwählplankennung vom Netz an das Benutzerendgerät, wobei der Wählplan einen Rufnummernplan und die Verwendung von Vorwahlnummern, Nachwahlnummern und zusätzlichen Informationen umfasst, die zum Herstellen einer Verbindung erforderlich sind;
Empfangen der Wählplankennung am Benutzerendgerät und Speichern der Kennung zur Verwendung durch einen IMS-Client;
Senden (305) einer SIP-Sitzungseinleitungsanforderung, die einen lokalen TEL-URI und die Standardwähl- oder Rufnummernplankennung als einen Telefonkontext gemäß IETF RFC 3966 umfasst, vom Benutzerendgerät an das IMS-Netz, wobei der Telefonkontext ein Parameter ist, der den Wählplan, in welchem eine lokale Nummer bereitgestellt wurde, für das IMS-Netz identifiziert.

13. Verfahren nach Anspruch 12, wobei die Wählplankennung an das Benutzerendgerät gesendet wird, wenn sich das das Benutzerendgerät beim IMS-Netz anmeldet oder neu anmeldet.

14. Verfahren nach Anspruch 12 oder 13, wobei die Wählplankennung durch eine versorgende Rufsitzungssteuerfunktion an das Benutzerendgerät gesendet wird.

15. Verfahren nach Anspruch 14, wobei die Wählplankennung innerhalb des IMS-Netzes als Teil eines Benutzerprofils, das von einem Heimat-Teilnehmerserver gespeichert wird, aufrechterhalten und auf die versorgende Rufsitzungssteuerfunktion heruntergeladen wird.

16. Verfahren nach Anspruch 13 oder 14, wobei die Wählplankennung eine Netz-Standardwähl- oder - Rufnummernplankennung ist, wenn keine andere Wählplankennung vom Netz erhalten werden kann.

## Revendications

1. Procédé d'installation d'une identité de plan de numérotage par défaut dans un terminal d'utilisateur comprenant un client IMS (41), le procédé comprenant à l'enregistrement ou à la suite de l'enregistrement d'un utilisateur du terminal d'utilisateur auprès d'un réseau IMS, la réception (304), au niveau du terminal, en provenance du réseau IMS, d'une identité de plan de numérotage et l'enregistrement de l'identité en tant qu'identité par défaut au niveau du terminal, dans lequel l'identité de plan de numérotage par défaut est ensuite utilisée par le client IMS en tant que contexte de téléphone selon les exigences d'IETF RFC 3966, le contexte de téléphone étant un paramètre qui identifie, auprès du réseau IMS, le plan de numérotage dans lequel un numéro local a été fourni, et
dans lequel le plan de numérotage comprend un plan de numérotation et l'utilisation de préfixes, de suffixes et d'informations complémentaires nécessaires pour réaliser un appel.

2. Procédé selon la revendication 1, dans lequel l'identité de plan de numérotage est reçue lorsque le terminal d'utilisateur effectue un enregistrement ou un réenregistrement IMS (301) auprès du réseau IMS.

3. Procédé selon la revendication 1 ou 2, dans lequel le client IMS comprend ledit contexte de téléphone avec un URI TEL ou SIP lors de l'envoi d'un message au réseau IMS.

4. Terminal d'utilisateur (42) comprenant un client IMS (41), le terminal d'utilisateur étant configuré pour effectuer, à l'enregistrement ou à la suite de l'enregistrement de l'utilisateur du terminal d'utilisateur auprès d'un réseau IMS, la réception d'une identité de plan de numérotage par défaut provenance du réseau, le plan de numérotage comprenant un plan de numérotation et l'utilisation de préfixes, de suffixes et d'informations complémentaires nécessaires pour réaliser un appel, et l'enregistrement de l'identité de plan de numérotage par défaut au niveau du terminal pour une utilisation ultérieure par le client IMS en tant que contexte de téléphone selon les exigences d'IETF RFC 3966, le contexte de téléphone étant un paramètre qui identifie, auprès du réseau IMS, le plan de numérotage dans lequel un numéro local a été fourni.

5. Terminal d'utilisateur selon la revendication 4, dans lequel le client IMS est configuré pour inclure le contexte de téléphone lorsque le terminal d'utilisateur envoie un message de demande de service au réseau IMS comprenant un URI TEL ou SIP.

6. Appareil (40) de configuration d'un client IMS (41) d'un terminal d'utilisateur (42) avec une identité de plan de numérotage par défaut, dans lequel le plan de numérotage comprend un plan de numérotation et l'utilisation de préfixes, de suffixes et d'informations complémentaires nécessaires pour réaliser un appel, l'appareil étant configuré pour une utilisation à l'intérieur d'un réseau central IMS et comprenant :
un processeur pour effectuer la détermination d'une identité de plan de numérotage d'origine pour un utilisateur dudit terminal d'utilisateur ;
une unité d'envoi pour effectuer l'envoi de ladite identité de plan de numérotage d'origine au dit terminal d'utilisateur ; et
un CSCF configuré pour effectuer la réception d'une demande d'établissement d'appel qui comprend ladite identité de plan de numérotage d'origine en tant que contexte de téléphone selon les exigences d'IETF RFC 3966, le contexte de téléphone étant un paramètre qui identifie, auprès du réseau IMS, le plan de numérotage dans lequel un numéro local a été fourni, et l'utilisation de l'identité pour établir un URI de destination pour l'appel.

7. Appareil selon la revendication 6, configuré pour obtenir l'identité de plan de numérotage en réponse à la réception d'une demande d'enregistrement ou de réenregistrement provenant du terminal d'utilisateur.

8. Appareil selon la revendication 7, configuré pour obtenir l'identité de plan de numérotage dans le cadre d'un profil d'utilisateur obtenu auprès d'un serveur d'abonné d'origine.

9. Appareil selon l'une quelconque des revendications 6 à 8, dans lequel l'identité de plan de numérotage est incluse dans un URI TEL dans la demande d'établissement d'appel.

10. Appareil selon l'une quelconque des revendications 6 à 9, configuré pour fonctionner en tant qu'une fonction de commande de session d'appel.

11. Appareil selon l'une quelconque des revendications 6 à 10, configuré pour fournir une identité de plan de numérotage ou de numérotation par défaut de réseau lorsqu'aucune autre identité de plan de numérotage ne peut être obtenue auprès du réseau.

12. Procédé de gestion de message SIP dans un réseau de communication basé sur IP, comprenant :
à l'enregistrement ou à la suite de l'enregistrement (301) d'un utilisateur auprès d'un réseau IMS, l'envoi (304), au terminal d'utilisateur, en provenance du réseau, d'une identité de plan de numérotage par défaut, dans lequel le plan de numérotage comprend un plan de numérotation et l'utilisation de préfixes, de suffixes et d'informations complémentaires nécessaires pour réaliser un appel ;
la réception de l'identité de plan de numérotage au dit terminal d'utilisateur et l'enregistrement de l'identité pour une utilisation par un client IMS ;
l'envoi (305) d'une demande d'ouverture de session SIP du terminal d'utilisateur au réseau IMS comprenant un URI Tel Local et ladite identité de plan de numérotage ou de numérotation par défaut en tant que contexte de téléphone selon les exigences d'IETF RFC 3966, le contexte de téléphone étant un paramètre qui identifie, auprès du réseau IMS, le plan de numérotage dans lequel un numéro local a été fourni.

13. Procédé selon la revendication 12, dans lequel l'identité de plan de numérotage est envoyée au terminal d'utilisateur lorsque l'utilisateur s'enregistre ou se réenregistre auprès du réseau IMS.

14. Procédé selon la revendication 12 ou 13, dans lequel ladite identité de plan de numérotage est envoyée au terminal d'utilisateur par une fonction de commande de session d'appel de desserte.

15. Procédé selon la revendication 14, dans lequel l'identité de plan de numérotage est maintenue à l'intérieur du réseau IMS dans le cadre d'un profil d'utilisateur maintenu par un serveur d'abonné d'origine et téléchargé dans la fonction de commande de session d'appel de desserte.

16. Procédé selon la revendication 13 ou 14, dans lequel l'identité de plan de numérotage est une identité de plan de numérotage ou de numérotation par défaut lorsqu'aucune autre identité de plan de numérotage ne peut être obtenue auprès du réseau.
